# FASCICULE DE BREVET EUROPEEN

(11) **EP 0 466 624 B1**
(45) Date de publication et mention de la délivrance du brevet: **22.11.1995**
(21) Numéro de dépôt: 91440056.9
(22) Date de dépôt: 12.07.1991
(51) Int. Cl.: B62K 15/00, B62K 5/08

(54) **Tricycle à roues directrices repliables**
Dreirad mit klappbaren lenkbaren Rädern
Tricycle with foldable steering wheels

(30) Priorité: 13.07.1990 FR 9009207; 04.10.1990 FR 9012395
(43) Date de publication de la demande: 15.01.1992
(73) Titulaire: Lepoix, Louis L., D-76530 Baden-Baden (DE)
(72) Inventeur: Lepoix, Louis L., D-76530 Baden-Baden (DE)
(74) Mandataire: Nuss, Pierre

(56) Documents cités:
- FR-A- 1 097 486
- FR-A- 2 256 070
- FR-A- 2 571 683
- US-A- 4 903 857
- US-A- 4 917 396

## Description

La présente invention concerne le domaine des véhicules à actionnement musculaire ou à légère motorisation électrique ou thermique, en particulier le domaine du cycle et a pour objet un tricycle à roues directrices repliables.

Il existe actuellement divers types de tricycles présentant généralement deux roues à l'arrière et une roue avant directrice.

On connaît également des tricycles ou triporteurs, dont la roue arrière est motrice et dont les deux roues avant sont directrices par pivotement autour d'un axe unique.

Enfin, il existe des tricycles, particulièrement pour l'usage des handicapés, présentant deux roues avant directrices et une roue arrière motrice.

Un exemple de ces tricycles est représenté par le document US-A-4903857.

Tous ces tricycles présentent un encombrement considérable dû à la voie constituée par les deux roues situées sur un axe transversal, perpendiculaire à l'axe du tricycle, ce qui pose des difficultés pour le rangement et le transport de ce véhicule.

La présente invention a pour but de pallier ces inconvénients.

Elle a, en effet, pour objet un tricycle selon la revendication indèpendante 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels:
la figure 1 est une vue en élévation latérale d'un tricycle conforme à l'invention avec représentation en pointillés de la position des roues directrices repliées vers l'arrière;
la figure 2 est une vue en plan suivant la figure 1;
la figure 3 est une vue analogue à celle de la figure 1 représentant, en pointillés, le repliement des roues directrices vers l'avant;
la figure 4 est une vue en plan suivant la figure 3;
la figure 5 est une vue en élévation frontale du tricycle avec représentation en pointillés des roues en position de repliement;
la figure 6 est une vue analogue à celle de la figure 1 d'une variante de réalisation de l'invention;
la figure 7 est une vue en plan suivant la figure 6;
la figure 8 est une vue analogue à celle des figures 1 et 3 d'une autre variante de réalisation de l'invention;
la figure 9 est une vue en élévation latérale d'un tricycle conforme à l'invention avec représentation en pointillés de la position des roues directrices repliées vers le bas;
la figure 10 est une vue en plan suivant la figure 9;
la figure 11 est une vue en élévation frontale correspondant aux figures 9 et 10;
la figure 12 est une vue analogue à celle de la figure 7 d'une autre variante de réalisation de l'invention, les roues directrices étant repliées vers le haut;
la figure 13 est une vue en élévation latérale d'une variante de réalisation de l'invention avec repliement des roues en diagonale;
la figure 14 est une vue en plan suivant la figure 13;
la figure 15 est une vue en élévation latérale d'un tricycle équipé d'un moteur électrique et muni d'un dispositif de protection partielle du conducteur, un moteur thermique étant représenté en pointillés, et
la figure 16 est une vue analogue à celles des figures 1, 3, 6, 9, 13 et 15 représentant diverses possibilités d'utilisation du tricycle.

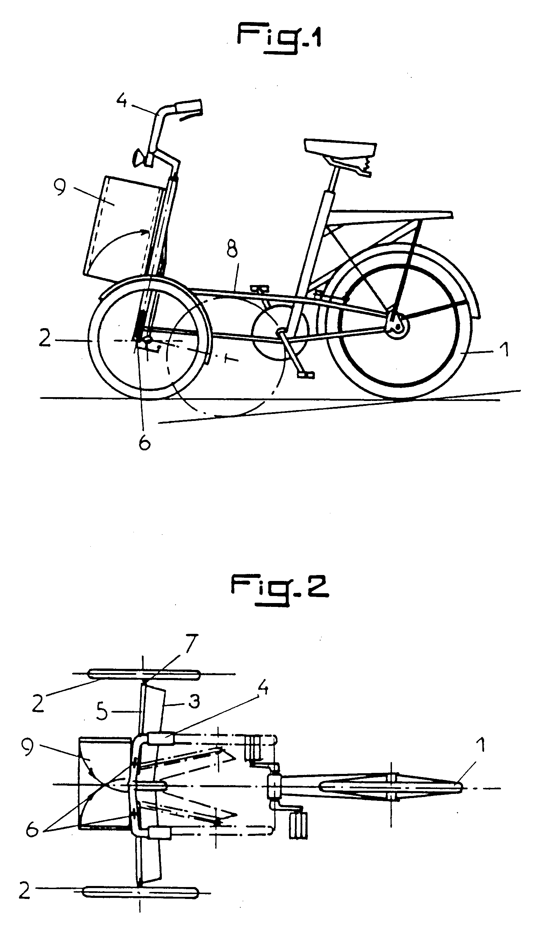

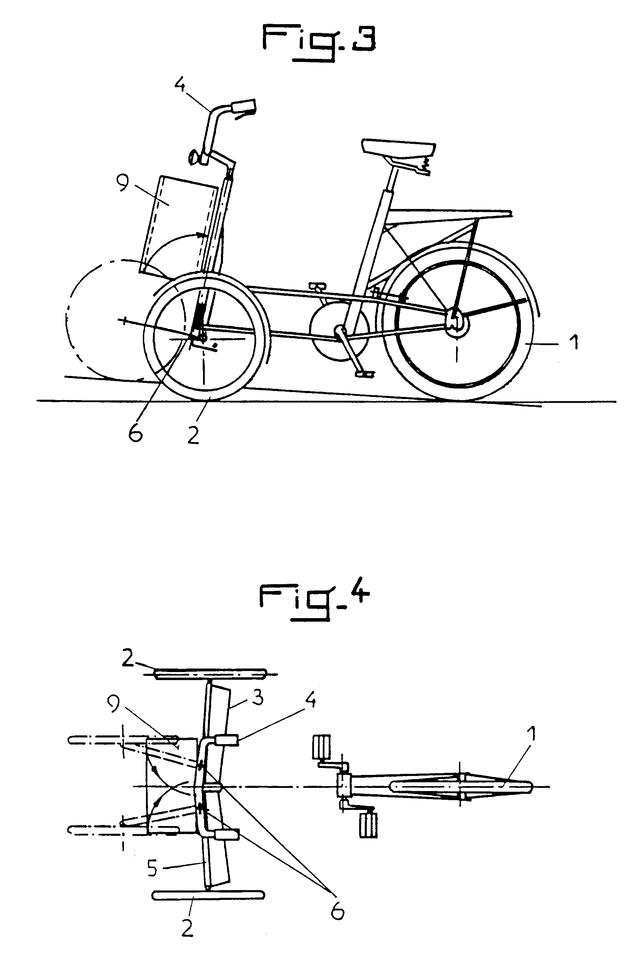

Conformément à l'invention, et comme le montrent plus particulièrement, à titre d'exemple, les figures 1 à 14 et 16 des dessins annexés, le tricycle, qui présente une roue arrière motrice 1 et des roues avant directrices 2, est caractérisé en ce que les roues directrices 2 sont indépendantes, sont montées avec possibilité de repliement parallèlement le long de l'axe longitudinal du tricycle et sont actionnées par une tringlerie de direction 3 commandée au moyen d'un guidon 4 ou d'un volant.

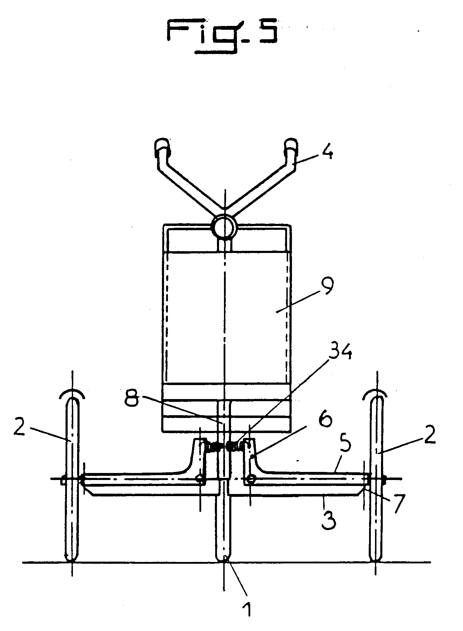

Les roues directrices 2, montées sur des fusées de roue 7, sont articulées sur une extrémité de bras de support 5, l'autre extrémité de ces bras 5 étant articulée sur un axe oblique 6 avec possibilité de blocage en position sur le cadre 8 du tricycle, les bras de support 5 étant avantageusement combinés à une suspension 34 (figures 5, 11 et 12).
Ainsi, par un déblocage de l'articulation des extrémités des bras 5 sur le cadre 8, il est possible de réaliser un repliement des roues directrices 2 sensiblement parallèlement au cadre 8, de telle manière que l'encombrement en position repliée soit diminué au maximum et au moins réduit à une largeur égale à celle correspondant aux pédales.

Les bras de support 5 sont articulés, à leur extrémité opposée aux roues 2 et repliables vers l'avant ou vers l'arrière sur le cadre 8 et sont pourvus d'un dispositif de blocage, ce dispositif étant avantageusement constitué par un secteur circulaire s'étendant au-dessus ou en dessous desdits bras 5 et muni de trous de passage pour une goupille de verrouillage coopérant avec des trous correspondants prévus dans lesdits bras 5. Ce mode de réalisation n'est pas représenté en particulier dans les dessins annexés, mais est parfaitement accessible à l'homme de l'art. Ainsi, il est possible, par simple déverrouillage des goupilles, de déplacer les roues 2, vers l'avant ou vers l'arrière, parallèlement au cadre 8 et de les fixer dans la nouvelle position de repliement par remise en place desdites goupilles (figures 1 à 8).

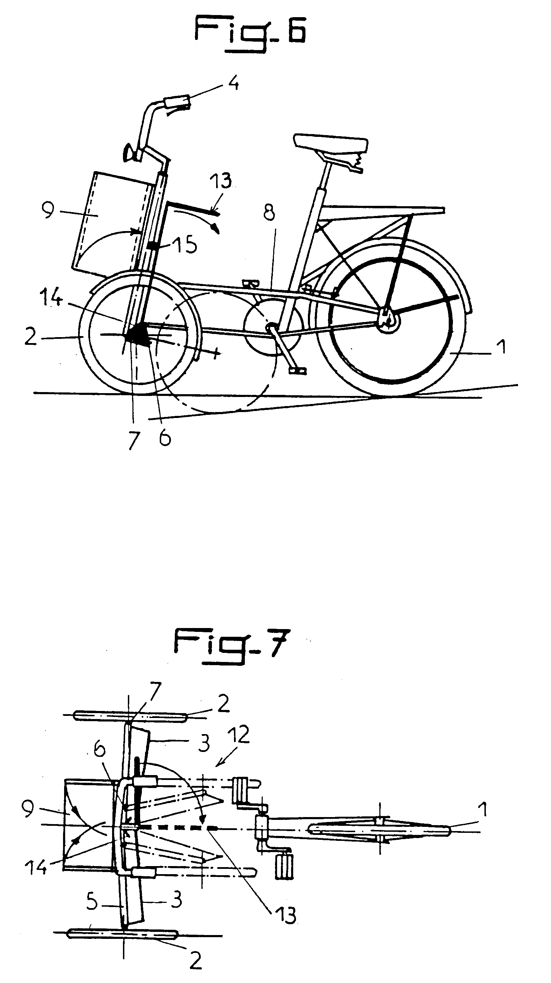

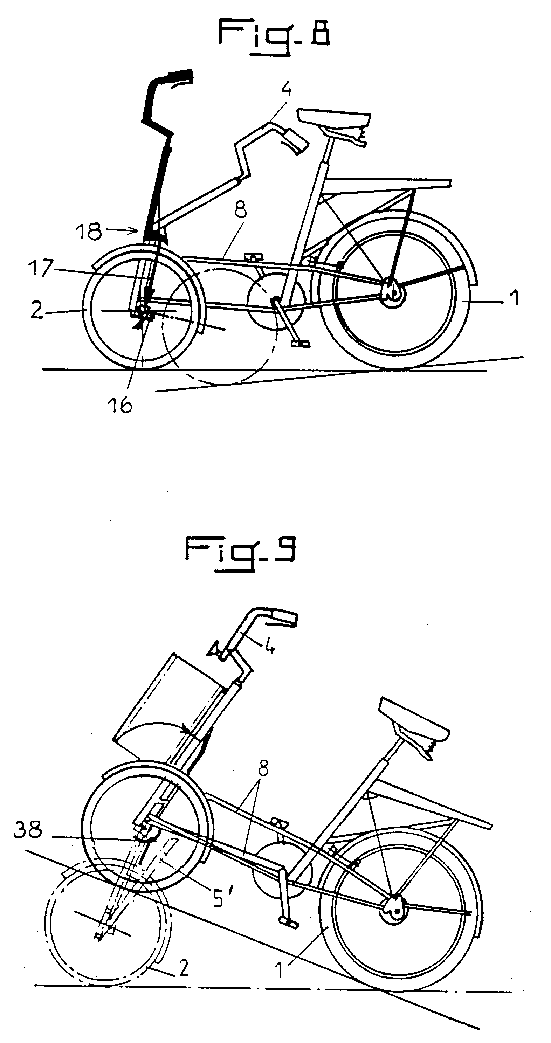

Selon une autre caractéristique de l'invention, et comme le montrent les figures 6 et 7 des dessins annexés, l'extrémité des bras de support 5, articulée sur le cadre 8, coopère avec un dispositif 12 constitué par un levier 13 monté de manière pivotante sur la gaine de la colonne de direction et coopérant à son extrémité inférieure, par l'intermédiaire d'un secteur denté ou d'une roue dentée (non représentés), avec deux secteurs dentés ou roues dentées 14 prévus sur les bras de support 5, le levier 13 pouvant être muni, dans sa partie supérieure, d'un moyen de verrouillage 15, tel qu'un cadenas ou analogue, destiné à coopérer avec le cadre 8. Ainsi, il est possible, par blocage du levier 13, de constituer un antivol (figure 6).

Selon une autre caractéristique de l'invention, et comme le montre la figure 5 des dessins annexés, les roues directrices 2 sont avantageusement montées avec possibilité de débattement vertical par prévision d'un moyen de suspension 34 agissant sur les extrémités desdits bras 5 articulés au cadre 8.

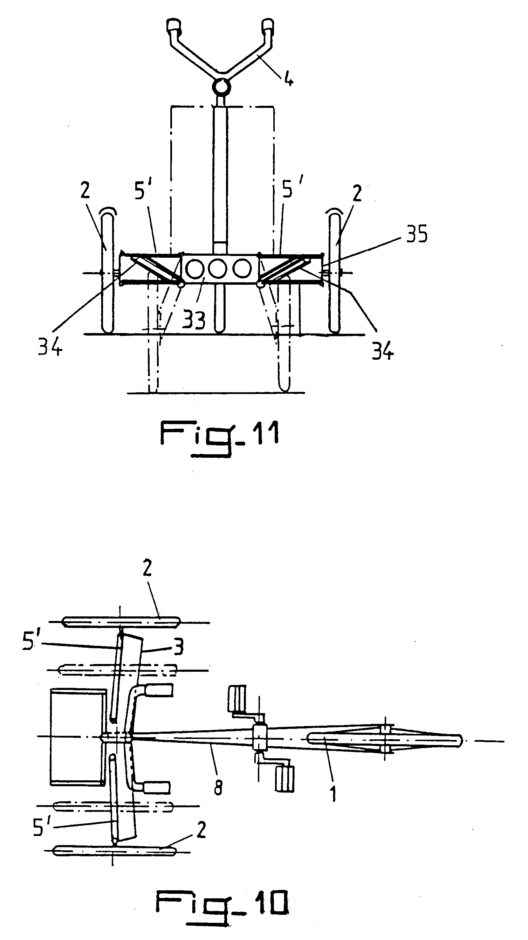

Conformément à une autre caractéristique de l'invention, et comme le montrent plus particulièrement les figures 9 à 12 des dessins annexés, les roues directrices 2 sont avantageusement repliables vers le bas ou vers le haut et sont montées sur des demi-axes 5′ sous forme de parallélogrammes déformables articulés chacun, d'une part, sur le cadre 8 du tricycle et, d'autre part, sur la fusée de roue correspondante 35.

Ainsi, il est possible de réaliser un repliement des roues directrices vers le bas par simple soulèvement du cadre 8, le maintien en position de repliement étant assuré par le verrou 38 solidaire de la partie inférieure du cadre 8 ou de la colonne de direction.

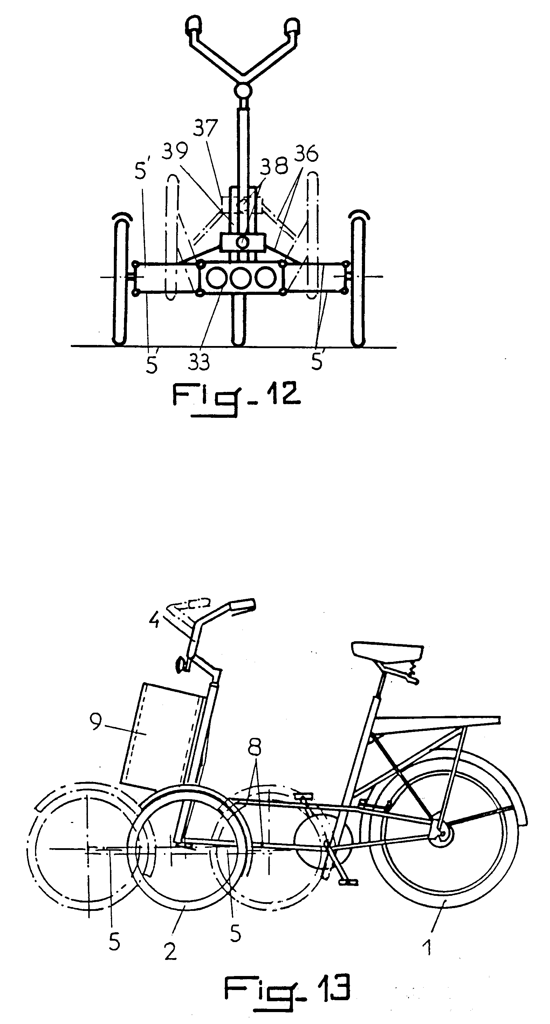

La figure 11 des dessins annexés représente une variante de réalisation de l'invention, dans laquelle les demi-axes 5′ sont articulés sur le cadre 8 par l'intermédiaire d'une pièce centrale 33 solidaire du cadre 8, la limitation du débattement vers le haut étant réalisée au moyen d'éléments de suspension 34 disposés dans les parallélogrammes constituant les demi-axes 5′, le verrouillage en position de repliement étant réalisé par l'intermédiaire de verrous de blocage (non représentés) solidaires de la pièce centrale 33.

Conformément à une autre variante de réalisation de l'invention, représentée à la figure 12 des dessins annexés, les demi-axes 5′, articulés sur le cadre 8 par l'intermédiaire d'une pièce centrale 33, sont repliables vers le haut et sont maintenus en position de service par un verrou non représenté ou par des bras de triangulation 36 coopérant avec un coulisseau 37 se déplaçant le long de la colonne et direction sur des guides 39 solidaires du cadre 8 et bloqué dans ladite position de service au moyen de vis ou de leviers à came de serrage rapide 38.

Les bras 36 peuvent également être constitués sous forme d'éléments de suspension.

Ainsi, par simple déblocage du coulisseau 37, il est possible de réaliser un repliage des roues 2 parallèlement au cadre 8 dans une position représentée en trait mixte fin à la figure 12.

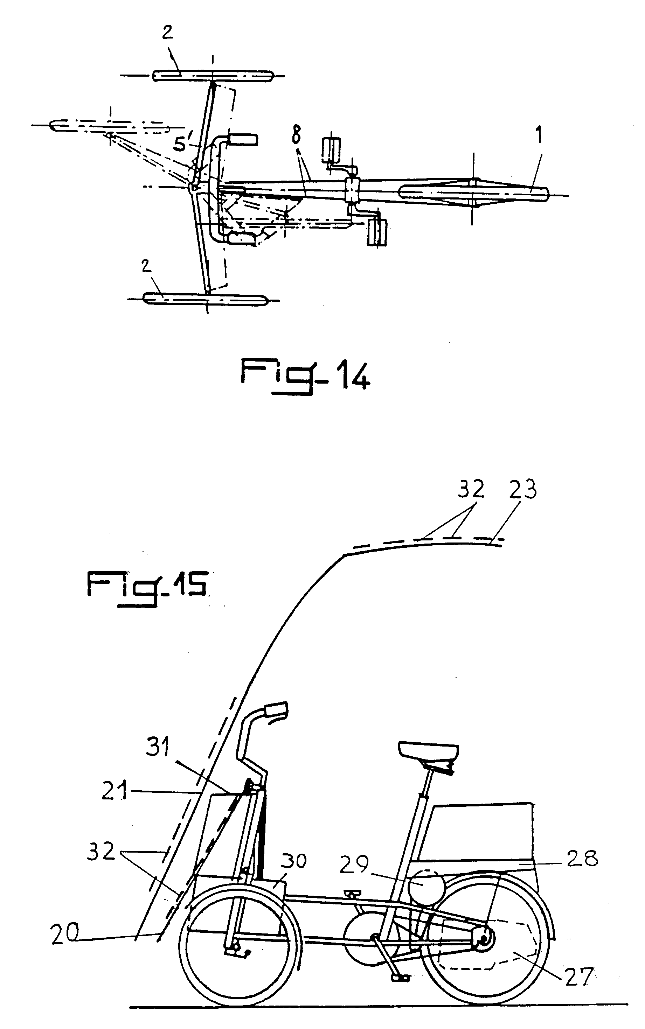

Les figures 13 et 14 représentent une autre variante de réalisation de l'invention, dans laquelle les roues directrices 2 sont articulées sur des demi-axes de support 5′ indépendants ou sur un axe de support unique rigide (non représenté) et sont repliables en diagonale par rapport au cadre 8, après déverrouillage de leur position de service, par encliquetage avec la colonne de direction, et rotation autour de l'axe de cette dernière.

Dans ce mode de réalisation, les demi-axes de support 5′ sont pourvus d'un dispositif de blocage, avantageusement constitué par un secteur circulaire solidaire du cadre 8 et muni de trous de passage pour une goupille de verrouillage ou un dispositif d'encliquetage escamotable coopérant avec des trous correspondants du secteur circulaire. Le dispositif de blocage et le dispositif d'encliquetage ne sont pas représentés en particulier dans les dessins annexés, mais sont parfaitement accessibles à l'homme de l'art. Ainsi, il est possible, par simple déverrouillage des goupilles ou libération du dispositif d'encliquetage, de déplacer les roues 2 en diagonale, respectivement l'une vers l'avant et l'autre vers l'arrière, parallèlement ou sensiblement parallèlement au cadre 8 et de les fixer dans la nouvelle position de repliement.

La figure 8 des dessins annexés représente une autre variante de réalisation de l'invention, dans laquelle les extrémités des bras de support 5, articulées sur le cadre 8, sont munies d'un moyen d'encliquetage 16 coopérant avec un verrou 17 solidaire de la colonne de direction, qui est avantageusement pourvue d'un axe de repliement 18, ledit verrou 17 permettant le repliement des roues 2 lors du repliement de la colonne de direction par une sortie du verrou 17 hors du moyen d'encliquetage 16, de sorte que l'articulation des extrémités correspondantes des bras de support 5 est débloquée.

Il est également possible, de manière connue et non représentée aux dessins annexés, de réaliser le tricycle sous forme repliable, avec prévision d'articulations de repliement du tube de selle et de la colonne de direction, afin de limiter l'encombrement au minimum.

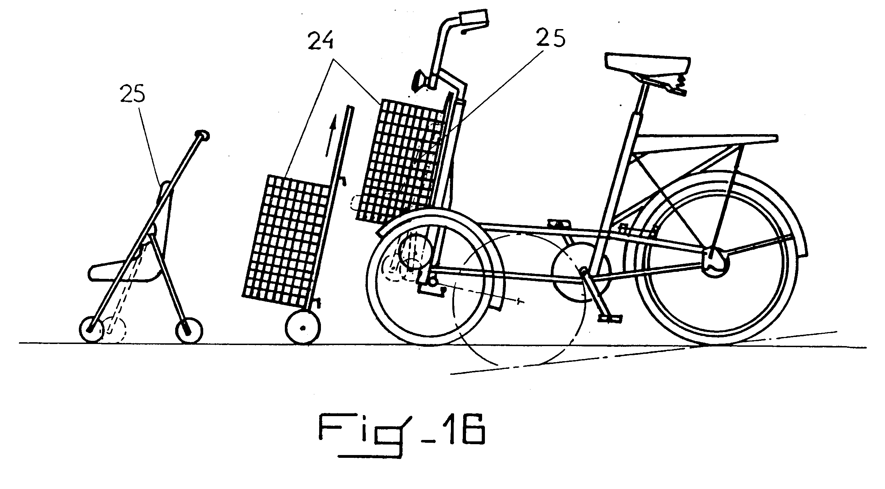

Le tricycle conforme à l'invention peut également être équipé, comme le montre la figure 15, d'un dispositif d'entraînement par moteur électrique 29 alimenté par une batterie 30 et commandé par un circuit électronique 31, ladite batterie 30 pouvant être chargée au moyen de cellules photovoltaïques 32 disposées sur une plaque 20 montée devant la colonne de direction, ou encore sur un panneau fixe central 21 d'un moyen de protection et sur le toit 23 dans le cas où le tricycle est équipé d'un moyen de protection du conducteur, ou encore par moteur à combustion interne 27, monté, par exemple, en prise directe avec le moyeu de la roue arrière 1 (en pointillés sur la figure 15), le réservoir de combustible pouvant alors être intégré au porte-bagages arrière 28.

Il est également possible de réaliser une suspension de l'ensemble du tricycle conforme à l'invention par prévision d'une suspension intégrée, d'une part, dans le tube de selle et, d'autre part, dans la colonne de direction, ou autour de cette dernière, cette suspension agissant sur le point d'ancrage des extrémités des bras 5.

Ainsi, le confort du tricycle, conforme à l'invention, est notablement amélioré par rapport aux tricycles existants.

Conformément à une autre caractéristique de l'invention, la partie avant du tricycle est avantageusement munie sous le guidon 4 et sur la gaine de la colonne de direction d'un moyen d'accrochage permettant la fixation d'un conteneur repliable 9 (figures 1 à 7, 9, 10, 13 et 15), d'un panier d'achats à roulettes 10 amovible ou encore d'une poussette pour enfant 25 (figure 16).

Grâce à l'invention, il est possible de réaliser rapidement un repliement des roues directrices d'un tricycle vers le haut, vers le bas, vers l'avant, vers l'arrière ou en diagonale, de manière à limiter son encombrement en position de non utilisation, la position de service pouvant être obtenue par un simple déverrouillage des roues partir de leur position précédente.

Ainsi, la conception du tricycle conforme à l'invention permet une utilisation optimale de son encombrement pour son chargement et, en position repliée, un encombrement minimal ainsi qu'une impossibilité d'utilisation en cas de repliement des roues directrices, ce qui constitue un antivol par le blocage en position de repliement.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Tricycle, présentant une roue arrière motrice (1) et des roues avant directrices (2) actionnées par une tringlerie de direction (3) commandée au moyen d'un guidon (4) ou d'un volant, les roues avant directrices étant indépendantes, caractérisé en ce que les roues avant directrices (2) sont supportées de chaque côté par un bras de support latéral (5) et un axe d'articulation (6) pour le repliement situé en bout du bras (5) et solidaire du cadre (8), l'autre extrémité du bras latéral (5) étant articulée sur une fusée (7) de la roue avant directrice (2) correspondante, de manière à permettre un débattement des roues directrices (2), la tringlerie de direction (3) formant avec les bras latéraux (5) des quadrilatères déformables permettant un repliement de ces bras (5), avec possibilité de blocage de ceux-ci, tout en maintenant les roues dans une position sensiblement parallèle au plan longitudinal vertical du tricycle.

2. Tricycle, suivant la revendication 1, caractérisé en ce que les axes d'articulation (6) des bras de support (5) sont obliques par rapport à la verticale, permettant un mouvement de repliement desdits bras de support par simple soulèvement de la partie avant du tricycle.

3. Tricycle, suivant l'une quelconque des revendications 1 et 2, caractérisé en ce que les bras de support latéraux (5) sont pourvus d'un dispositif de blocage constitué par un secteur circulaire s'étendant au-dessus ou en dessous desdits bras (5) et muni de trous de passage pour une goupille de verrouillage coopérant avec des trous correspondants prévus dans lesdits bras (5) ou des cames à serrage rapide.

4. Tricycle, suivant la revendication 1, caractérisé en ce que l'extrémité des bras de support latéraux (5), articulée sur le cadre (8), coopère avec un dispositif (12) constitué par un levier (13) monté de manière pivotante sur la gaine de la colonne de direction et coopérant à son extrémité inférieure, par l'intermédiaire d'un secteur denté ou d'une roue dentée, avec deux secteurs dentés ou roues dentées (14) prévus sur les bras de support (5), le levier (13) pouvant être muni, dans sa partie supérieure, d'un moyen de verrouillage (15), tel qu'un cadenas ou analogue, destiné à coopérer avec le cadre (8).

5. Tricycle, suivant l'une quelconque des revendications 1 et 2, caractérisé en ce que les roues directrices (2) repliables sont montées sur des demi-axes (5') sous forme de parallélogrammes déformables verticaux articulés chacun, d'une part, sur le cadre (8) du tricycle, par l'intermédiaire d'une pièce centrale (33) solidaire du cadre (8), et, d'autre part, sur la fusée de roue correspondante (35), la limitation du débattement vers le haut étant réalisée au moyen d'éléments de suspension (34).

6. Tricycle, suivant la revendication 5, caractérisé en ce que les demi-axes (5'), articulés sur le cadre (8) par l'intermédiaire d'une pièce centrale (33), sont repliables et sont maintenus en position de service par un verrou et par des bras de triangulation (36) coopérant avec un coulisseau (37) se déplaçant sur un ou des guides (39) solidaires de la colonne de direction et bloqué dans ladite position de service au moyen de vis ou de leviers à carne de serrage rapide (38).

7. Tricycle, suivant la revendication 1, caractérisé en ce que les roues directrices (2) sont articulées sur des demi-axes de support (5') indépendants ou sur un axe de support unique rigide et sont repliables en diagonale par rapport au cadre (8), après déverrouillage de leur position de service, par encliquetage avec la colonne de direction, et rotation autour de l'axe de cette dernière.

8. Tricycle, suivant l'une quelconque des revendications 1 à 4, caractérisé en ce que les bras de support (5) sont montés oscillants par l'intermédiaire d'un moyen de suspension (34) agissant sur les extrémités desdits bras (5) articulés au cadre (8).

9. Tricycle, suivant l'une quelconque des revendications 1 à 8, caractérisé en ce que les extrémités des bras de support (5), articulées sur le cadre (8), sont munies d'un moyen d'encliquetage (16) coopérant avec un verrou (17) solidaire de la colonne de direction, qui est pourvue d'un axe de repliement (18), ledit verrou (17) permettant le repliement des roues (2) lors du repliement de la colonne de direction par une sortie du verrou (17) hors du moyen d'encliquetage (16), de sorte que l'articulation des extrémités correspondantes des bras de support (5) est débloquée.

10. Tricycle, suivant l'une quelconque des revendications 1 à 9, caractérisé en ce que sa partie avant est munie sous le guidon (4) et sur la gaine de la colonne de direction d'un moyen d'accrochage permettant la fixation d'un conteneur repliable (9), d'un panier d'achats à roulettes (10) amovible ou encore d'une poussette pour enfant (25).

## Claims

1. Tricycle, having a driving rear wheel (1) and guiding front wheels (2) actuated by a steering linkage (3) controlled by means of handlebars (4) or a steering wheel, the guiding front wheels being independent, characterised in that the guiding front wheels (2) are supported on either side by a lateral support arm (5) and a link pin (6) for folding situated at the end of the arm (5) and rigidly connected to the frame (8), the other end of the lateral arm (5) being linked to a stub axle (7) of the corresponding guiding front wheel (2), so as to allow travel of the guiding wheels (2), the steering linkage (3) forming, with the lateral arms (5), deformable quadrilaterals allowing folding of these arms (5), with the possibility of locking thereof, while maintaining the wheels in a position substantially parallel to the longitudinal vertical plane of the tricycle.

2. Tricycle according to claim 1, characterised in that the link pins (6) of the support arms (5) are oblique relative to the vertical, allowing a folding movement of said support arms by simple lifting of the front part of the tricycle.

3. Tricycle according to either of claims 1 and 2, characterised in that the lateral support arms (5) are provided with a locking device consisting of a circle sector extending above or below said arms (5) and provided with holes for the passage of a locking pin cooperating with corresponding holes provided in said arms (5) or quick-clamping cams.

4. Tricycle according to claim 1, characterised in that the end of the lateral support arms (5) which is linked to the frame (8) cooperates with a device (12) consisting of a lever (13) mounted pivotably on the casing of the steering column and cooperating at its lower end, by means of a toothed sector or a toothed wheel, with two toothed sectors or toothed wheels (14) provided on the support arms (5), the lever (13) being capable of being provided in its upper region with a locking means (15) such as a padlock or the like designed to cooperate with the frame (8).

5. Tricycle according to either of claims 1 and 2, characterised in that the foldable guiding wheels (2) are mounted on half-shafts (5') in the form of vertical deformable parallelograms each linked on the one hand to the tricycle frame (8), by means of a central piece (33) rigidly connected to the frame (8), and on the other hand to the corresponding wheel stub axle (35), limitation of upward travel being achieved by means of suspension elements (34).

6. Tricycle according to claim 5, characterised in that the half-shafts (5'), linked to the frame (8) by means of a central piece (33), can be folded and are held in the service position by a bolt and by wishbones (36) cooperating with a slide (37) moving on one or more guides (39) rigidly connected to the steering column and locked in said service position by means of screws or levers with quick-clamping cams (38).

7. Tricycle according to claim 1, characterised in that the guiding wheels (2) are linked to independent support half-shafts (5') or to a single rigid support shaft and can be folded diagonally relative to the frame (8), after release from their service position, by latching with the steering column, and rotation about the axis of the latter.

8. Tricycle according to any of claims 1 to 4, characterised in that the support arms (5) are mounted for swinging by a suspension means (34) acting on the ends of said arms (5) linked to the frame (8).

9. Tricycle according to any of claims 1 to 8, characterised in that the ends of the support arms (5) linked to the frame (8) are provided with a latching means (16) cooperating with a bolt (17) rigidly connected to the steering column, which is provided with a folding axis (18), said bolt (17) allowing folding of the wheels (2) upon folding of the steering column by exit of the bolt (17) from the latching means (16), so that linking of the corresponding ends of the support arms (5) is released.

10. Tricycle according to any of claims 1 to 9, characterised in that its front part is provided, under the handlebars (4) and on the casing of the steering column, with a hooking means allowing the fixing of a foldable container (9), a removable shopping basket with wheels (10) or a child's pushchair (25).

## Patentansprüche

1. Dreirad mit einem motorgetriebenen Hinterrad (1) und vorderen Leiträdern (2), die mittels eines durch einen Lenker (4) Lenkstange oder ein Steuerrad gelenkten Lenkgestänges (3) geführt werden, wobei die vorderen Leiträder unabhängig sind, dadurch gekennzeichnet, daß die vorderen Leiträder (2) an jeder Seite durch einen seitlichen Haltearm (5) und einen am Ende des Arms (5) liegenden und fest mit dem Rahmen (8) verbunden Drehbolzen (6) zum Einklappen gehalten werden, wobei das andere Ende des seitlichen Arms (5) gelenkig auf einer Drehscheibe (7) des entsprechenden vorderen Leitrades (2) angebracht ist und so ein Durchfedern der Leiträder (2) bis zum Anschlag ermöglicht, wobei das mit den seitlichen Armen (5) ein verformbares Viereck bildende Lenkgestänge (3) ein Einklappen der Arme (5) ermöglicht, mit der Möglichkeit, diese zu sperren, wobei die Räder in einer im wesentlichen zur senkrechten Längsebene des Dreirads parallelen Stellung gehalten werden.

2. Dreirad gemäß Anspruch 1, dadurch gekennzeichnet, daß die Drehbolzen (6) der Haltearme (5) schräg zur Vertikalen stehen und so durch einfaches Anheben des Vorderteils des Dreirads eine Klappbewegung dieser Haltearme ermöglichen.

3. Dreirad gemäß einem beliebigen der Ansprüche 1 und 2, dadurch gekennzeichnet, daß die seitlichen Haltearme (5) mit einer Sperrvorrichtung versehen sind, die aus einem runden Abschnitt besteht, der sich oberhalb oder unterhalb der Arme (5) erstreckt und mit Durchgangslöchern für einen Verriegelungsstift versehen ist, der mit entsprechenden, in den Armen (5) vorgesehenen Löchern oder mit Schnellspannocken zusammenwirkt.

4. Dreirad gemäß Anspruch 1, dadurch gekennzeichnet, daß das am Rahmen (8) angelenkte Ende des seitlichen Haltearms (5) mit einer Vorrichtung (12) zusammenwirkt, die aus einem Hebel (13) besteht, der schwenkbar auf dem Mantel der Lenksäule montiert ist und an seinem unteren Ende mittels eines gezahnten Abschnitts oder eines Zahnrads mit zwei auf dem Haltearm (5) vorgesehenen gezahnten Abschnitten oder Zahnrädern (14) zusammenwirkt, wobei der Hebel (13) in seinem oberen Teil mit einem Verriegelungsmittel (15), wie z.B. einem Bügelschloß oder dergl., versehen sein kann, das dazu bestimmt ist, mit dem Rahmen (8) zusammenzuwirken.

5. Dreirad gemäß einem beliebigen der Ansprüche 1 und 2, dadurch gekennzeichnet, daß die rückklappbaren Leiträder (2) an Halbachsen (5') in der Form verformbarer vertikaler, Parallelogramme befestigt sind, die jeweils einerseits am Rahmen (8) des Dreirads mittels eines am Rahmen (8) befestigten Mittelstücks (33) und andererseits auf der Drehscheibe des entsprechenden Rades (35) angelenkt sind, wobei die Begrenzung des Durchfederns nach oben durch Aufhängungselemente (34) bewirkt wird.

6. Dreirad gemäß Anspruch 5, dadurch gekennzeichnet, daß die über ein Mittelstück (33) am Rahmen (8) angelenkten Halbachsen (5') rückklappbar sind und durch einen Riegel und durch Radaufhängungsarme (36), die mit einem Gleitteil (37) zusammenwirken, das auf einer oder mehreren mit der Lenkstange fest verbundenen Schienen gleitet, in Betriebsstellung gehalten werden und in dieser Stellung mittels Schrauben oder Hebel mit Schnellspannocken (38) verriegelt werden.

7. Dreirad gemäß Anspruch 1, dadurch gekennzeichnet, daß die Leiträder (2) an zwei unabhängigen Haltehalbachsen (5') oder an einer einzigen starren Halteachse angelenkt sind und diagonal zum Rahmen (8) rückklappbar sind, nachdem ihre Betriebsstellung durch Einrasten in die Lenksäule und Drehung um deren Achse entriegelt wurde.

8. Dreirad gemäß einem beliebigen der Ansprüche 1 bis 4, dadurch gekennzeichnet, daß die Haltearme (5) mittels eines Aufhängungselements (34), das auf die äußeren Enden der am Rahmen (8) angelenkten Arme (5) wirkt, pendelnd montiert sind.

9. Dreirad gemäß einem beliebigen der Ansprüche 1 bis 8, dadurch gekennzeichnet, daß die Enden der am Rahmen (8) angelenkten Haltearme (5) mit einem Einrastmittel (16) versehen sind, das mit einem mit der Lenkstange, die mit einer Rückklappachse (18) versehen ist, fest verbundenen Riegel (17) zusammenwirkt, wobei dieser Riegel (17) das Hochklappen der Räder (2) beim Rückklappen der Lenkstange durch Herausziehen des Riegels (17) aus dem Einrastmittel (16) zuläßt, derart, daß das Schwenken der entsprechenden Enden der Haltearme (5) freigegeben wird.

10. Dreirad gemäß einem beliebigen der Ansprüche 1 bis 9, dadurch gekennzeichnet, daß sein Vorderteil unter dem Lenker (4) und am Mantel der Lenksäule mit einem Einhängmittel versehen ist, das das Befestigen eines faltbaren Behälters (9), eines abnehmbaren Einkaufskorbs mit Rädern (10) oder auch eines Kinderwagens (25) ermöglicht.
